# EUROPEAN PATENT SPECIFICATION

(11) **EP 4 022 405 B1**
(45) Date of publication and mention of the grant of the patent: **15.05.2024**
(21) Application number: 20768104.0
(22) Date of filing: 28.08.2020
(51) Int. Cl.: G05B 19/048, H04L 9/40

(54) **SYSTEMS AND METHODS FOR ENHANCING DATA PROVENANCE BY LOGGING KERNEL-LEVEL EVENTS**
SYSTEME UND VERFAHREN ZUR VERBESSERUNG DER DATENHERKUNFT DURCH PROTOKOLLIEREN VON EREIGNISSEN AUF KERNELEBENE
SYSTÈMES ET PROCÉDÉS D'AMÉLIORATION DE LA PROVENANCE DE DONNÉES PAR JOURNALISATION D'ÉVÉNEMENTS DE NIVEAU DE NOYAU

(30) Priority: 30.08.2019 NZ 19756876
(43) Date of publication of application: 06.07.2022
(73) Proprietor: First Watch Limited, Te Rapa, Hamilton 3200 (NZ)
(72) Inventor: CHOI, Taejun, Hamilton, 3216 (NZ); KO, Ryan Kok Leong, Hamilton, 3216 (NZ); ANDERSON-SCOTT, Christian, Hamilton, 3216 (NZ)
(74) Representative: J A Kemp LLP
(86) International application number: PCT/IB2020/058073
(87) International publication number: WO 2021/038527

(56) References cited:
- US-A1- 2002 046 275
- US-A1- 2017 041 329
- MATTHIAS SCHMIDT ET AL: "Malware Detection and Kernel Rootkit Prevention in Cloud Computing Environments", PARALLEL, DISTRIBUTED AND NETWORK-BASED PROCESSING (PDP), 2011 19TH EUROMICRO INTERNATIONAL CONFERENCE ON, IEEE, 9 February 2011 (2011-02-09), pages 603-610, XP031932866, DOI: 10.1109/PDP.2011.45 ISBN: 978-1-4244-9682-2

## Description

### Technical Field

The present disclosure relates to techniques for generating a time-ordered event data stream of kernel-level events captured across different types of computing devices (e.g., devices running operating systems and devices running real-time operating systems) included in an industrial control system.

### Background

Industrial control systems involve networks of various technologies that automate processes for industrial applications, including, for example, the manufacturing, transportation, energy, and water treatment industries. Industrial control systems generally include operational technology networks that are structured into three levels: (1) an operation or supervisory level, (2) a control or automation level, and (3) a field level. There is a wide variety of configurations in industrial control systems. Additionally, various communication technologies enable the transfer of data signals between different components at the different levels of the industrial control systems. Further, industrial control systems may refer to all of the technological components (e.g., both hardware and software) that are contained within the system. In many cases, the technologies across these three levels generally include supervisory computers, engineering workstations, and human-machine interfaces at the operational level; controllers, such as Programmable Logic Controllers (PLC) or Remote Terminal Units (RTU) at the control or automation level; and sensors and actuators at the field level and various communication devices connecting the various devices or technologies at various levels (e.g., modems).

Traditionally, the operational technology networks of industrial control systems were separated from corporate information technology (TT) systems. Physical separation of the two systems provided an "air gap," which meant there were relatively few opportunities for cyberattacks on the industrial control systems. However, IT and operational technology networks have become increasingly intertwined within enterprises. For example, enterprise planning and management systems for managing j ust-in-time production and providing management insight into operations are networks that are fairly intertwined. Further, there is an increasing proliferation of devices in operational technology networks having wireless connectivity, including the capability to connect to the Internet. The resulting intertwining of operational technology and IT networks provides increased opportunities for threat actors to gain access to the operational technology networks. Since industrial control systems utilizing operational technology networks are often used to control critical infrastructure and the associated processes, such breaches have the potential to result in significant economic loss, environmental damage, and even loss of human life.

Monitoring system health and process-related data in industrial control systems to combat cybersecurity threats is a technical challenge. For instance, information technology or performance-related applications can neglect to account for attack vectors specific to industrial control systems (e.g., threats that focus on cyber-physical elements of the operational technology network, such as PLCs), or fail to monitor events to a level of granularity at which such attacks can occur in industrial control systems. US2002/0046275A1 discloses a system and method for host-based intrusion detection to enhance local host-level security within a network.

Further, while a rapid response to cybersecurity threats is generally desirable, this is particularly important in the context of industrial control systems, given the difficulty of detecting unexpected operational changes in certain computing devices (e.g., sensors and actuators), potential consequences of cybersecurity threats, and the rate at which events occur within such systems. Additionally, industrial control systems are often not configured for triggering alerts for real-time threats. Thus, there remains room for improvement in this regard.

### Summary

The term embodiment and like terms are intended to refer broadly to all of the subject matter of this disclosure. Statements containing these terms should be understood not to limit the subject matter described herein or to limit the meaning or scope of the claims below. Embodiments of the present disclosure covered herein are defined by the claims below, not this summary. This summary is a high-level overview of various aspects of the disclosure and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this disclosure, any or all drawings and each claim.

Industrial control systems can involve complex combinations of various technologies. An industrial control system may include a network comprised of different types of computing devices interacting with each other. In a given industrial control system, a computing device may be of a different type than another computing device when there is at least one hardware configuration (e.g., different processor specifications or different memory specifications) or at least one software configuration (e.g., different operating systems) that is different between the two computing devices. For example, certain computing devices within the industrial control system may operate using a first operating system (e.g., a WINDOWS Operating System running on an operator terminal), and other computing devices within the same industrial control system may operate using a second operating system (e.g., a real-time Operating System running on a PLC or RTU), further adding to the network complexity. The network complexities due to the various differences between configurations of computing devices make monitoring events in the aggregate across different computing devices a difficult challenge. The network complexities of industrial control systems create technical challenges with network security and data provenance. For instance, the different ways in which data is recorded and processed across different computing devices within an industrial control system creates a technical challenge with respect to identifying the origin of a security-related event and tracing the impact of that security-related event through the various computing devices in the industrial control system.

Certain aspects and features of the present disclosure relate to techniques for generating a time-ordered event data stream that includes kernel-level events captured across different types of computing devices, for example, within an industrial control system. Further, certain aspects and features of the present disclosure relate to techniques for generating the time-ordered event data stream in a computationally efficient manner by detecting kernel-level events in the kernel space of an operating system running on a computing device and transmitting the kernel-level events to a remote server using the user space of the operating system. The techniques may provide visibility and transparency into the detectable kernel-level events that occur within computing devices across an industrial control system, thereby providing a technical solution to the technical challenges described above.

A kernel of an Operating System is executable code that manages the processing resources (e.g., memory, user access, timing, and the like) of a processor. Security vulnerabilities are often associated with the operating system of a computing device, and thus, monitoring kernel-level events enables industrial control systems to detect and prevent security threats in real time, near real time, or substantially real time (e.g., 10-20 seconds delay after an event is detected or logged).

In some implementations, at the kernel or within the kernel space, an events' data may be generated and collected; the events may or may not be filtered using a monitoring condition, the detected kernel-level event may be timestamped, the detected kernel-level event may be encapsulated into a log or a message and transmitted to the user space, and/or certain network data related to the first or second type of computing devices may be collected (e.g., data from modems located between the PLC and the HMI, for example, when logging agents are installed in the kernel spaces of the modems to log kernel-level events detected at the modems). In some examples, the network data may be collected from intermediate devices, and not necessarily from the kernel spaces of the devices. In some implementations, at the user space, the messages or logs received from the kernel space may or may not be ordered in a time sequence, logs may or may not be filtered using a monitoring condition, one or more machine-learning or artificial intelligence techniques may be applied to the logs before being transmitted to a remote server, the logs may be transmitted to a remote server using a network daemon, and/or any other suitable decision-making may be performed at the user space before the logged entries are transmitted to the remote server. In some implementations, at the remote server or at a message queuing server, the logs received from various computing devices (e.g., in an industrial control system) may be incorporated into a time-ordered event data stream, an analysis (e.g., a cybersecurity analysis to detect network attacks or other network anomalies) may be performed, and/or one or more decisions may be transmitted back to the user space of the computing devices based on the results of the analysis.

Additionally, as a technical advantage, certain embodiments of the present disclosure relate to generating a time-ordered event data stream that includes a synchronized sequence of kernel-level events received from the user space of a first type of computing device (e.g., a computer running WINDOWS Operating System) and from the user space of a second type of computing device (e.g., a sensor or actuator operated by a PLC running a real-time operating system, such as VXWORKS). The time-ordered event data stream may be analyzed in real-time for security threats.

To illustrate and only as a non-limiting example, a manufacturing plant may be structured to manufacture one or more products using hundreds of different computing devices that assist in the manufacturing process, including a first type of computing device, such as a desktop computer running an operating system, and a second type of computing device, such as a PLC running a real-time operating system. Each computing device included in the manufacturing plant may be configured to detect kernel-level events in its kernel space by storing logic in the kernel of the operating system (for the first type of computing device) or in the kernel of the real-time operating system (for the second type of computing device). Further, for each computing device included in the manufacturing plant, the kernel transmits the detected kernel-level events to the user space of the operating system (for the first type of computing device) or to the user space of the real-time operating system (for the second type of computing device). The user space is used to transmit the detected kernel-level events to a remote server (e.g., a cloud network) for analysis and evaluation. The remote server generates a time-ordered event data stream, which includes the detected kernel-level events from the first type of computing device (e.g., the desktop computer) and the detected kernel-level events from the second type of computing device (e.g., the PLC). The time-ordered event data stream is analyzed by the remote server to detect cybersecurity threats in real-time. In this non-limiting example, the operation of a PLC may malfunction as a result of being hacked by a threat actor. According to certain embodiments described herein, the remote server analyzes the time-ordered event data stream to determine in real-time that the malfunctioning PLC is an anomaly. In response to the detected anomaly, an alert may be generated for review by the manufacturing plant's supervisor.

Certain embodiments of the present disclosure relate to systems and methods that capture events of interest relevant to security and data provenance within a cyber-physical system. Kernel-level events that occur at computing devices across the industrial control system may be detected and logged. The logged events can be transmitted to a remote server using the user space of the operating system of the computing device to detect threats to the network in real time. Additionally, the logged events can be processed while maintaining the integrity of individual log records (i.e., without tampering with the log records).

In some implementations, the present disclosure relates to an apparatus used in the monitoring, capture, logging, analysis and reporting of events of interest. In some implementations, the present disclosure relates to computer-implemented methods used in the monitoring, capturing, logging, analysis and reporting of events of interest in a cyber-physical system.

Certain embodiments of the present disclosure are directed to a computer-implemented method including: monitoring, using a logging agent operating on a physical computing device in a cyber-physical system, kernel-level actions of the physical computing device; identifying an event of interest in the kernel-level actions; obtaining attributes of the identified event of interest; logging the event of interest including the obtained attributes in a new log entry; and transmitting the new log entry to a remote computing device for recordal in an accumulated log.

Certain embodiments of the present disclosure are directed to a computer-implemented method including: receiving a new log entry at a computing device from a logging agent operating on a remote physical computing device in a cyber-physical system, the new log entry including an event of interest identified in kernel-level actions of the remote physical computing device and attributes of the event of interest; and recording the new log entry in an accumulated log with previously received log entries.

Certain embodiments of the present disclosure are directed to a physical computing device for connection in a cyber-physical system, the physical computing device including: a non-transitory memory that stores operational instructions; and at least one processing device (e.g., a processor) that executes the operational instructions, which cause the at least one processing device to: monitor, using a logging agent operating on the physical computing device, kernel-level actions of the physical computing device; identify an event of interest in the kernel-level actions; obtain attributes of the identified event of interest; log the event of interest including the obtained attributes in a new log entry; and transmit the new log entry to a remote computing device for recordal in an accumulated log.

Certain embodiments of the present disclosure are directed to a system including: at least one physical computing device including: a first non-transitory memory that stores first operational instructions; and at least one first processing device that executes the first operational instructions, which cause the at least one first processing device to: monitor, using a logging agent operating on the physical computing device, kernel-level actions of the physical computing device; identify an event of interest in the kernel-level actions; obtain attributes of the identified event of interest; log the event of interest including the obtained attributes in a new log entry; and transmit the new log entry; at least one remote computing device including: a second non-transitory memory that stores second operational instructions; and at least one second processing device that executes the second operational instructions, which cause the at least one second processing device to: receive the new log entry; and record the new log entry in an accumulated log with previously received log entries.

In some implementations, a system may be provided. The system may include one or more computers configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions. One general aspect includes a computer-implemented method including loading a logging agent to a kernel of an operating system executing on a computing device, the logging agent being configured to detect kernel-level events occurring at the computing device, and the operating system being configured to define a kernel space and a user space of the computing device; detecting, at the computing device, a kernel-level event using the logging agent loaded to the kernel, the kernel-level event being characterized by an attribute, and the kernel-level event being detected in the kernel space; determining whether the detected kernel-level event satisfies a monitoring condition, the monitoring condition identifying at least one kernel-level event to log, and the determination being performed in the user space; in response to determining that the detected kernel-level event satisfies the monitoring condition, generating a log record that encapsulates the detected kernel-level event and the attribute, and the log record being generated in the user space; and transmitting the generated log record from the user space, where, upon receiving the log record, the detected kernel-level event and the attribute are combined with one or more other log records from one or more other computing devices into a time-ordered event data stream configured to be evaluated by a remote server. Other embodiments of this aspect include corresponding computer systems, apparatus, and computer programs recorded on one or more non-transitory computer-readable media, each configured to perform the operations of the methods described herein.

Certain embodiments of the present disclosure are directed to a computer-program product for performing a method according to at least one of the preceding aspects, the computer-program product comprising a non-transitory computer readable storage medium having program instructions embodied therewith, the program instructions executable by at least one processor to cause the processor to perform the method.

Certain embodiments of the present disclosure are directed to a method of producing a time-ordered event data stream including the log entries in the accumulated log.

Certain embodiments of the present disclosure are directed to a method of logging of events of interest in a cyber-physical system in substantially real-time (e.g., milliseconds, seconds, or minutes after an event is detected) for use in provisioning security services, for example, one or more of anomaly detection, threat forecasting, and security attribution.

Advantageously, the embodiments and implementations described herein provide a clear overview of kernel-level events that occur across different types of computing devices within an industrial control system (e.g., human-machine interfaces, actuators, operator's terminal, and so on). In addition, certain embodiments of the present disclosure provide for the synchronized, tamper-resistant collection of log record data (e.g., information or attributes characterizing events captured in a log record) across disparate computing devices in a manner that is agnostic to the operating system. Accordingly, regardless of whether computing devices run real-time operating systems or more traditional operating systems (e.g., WINDOWS), the present disclosure describes techniques that enable a remote server to detect and trace security vulnerabilities (e.g., malicious behavior, vulnerabilities, such as known flaws in the network, device misconfigurations, which can be exploited by a hacker) without imposing burdensome processing loads on the kernel of an operating system.

### Brief Description of the Drawings

The specification makes reference to the following appended figures, in which use of like reference numerals in different figures is intended to illustrate like or analogous components.
FIG. 1A illustrates an overview of multiple components of an exemplary system in which aspects of the present disclosure are implemented, including a cyber-physical system in the form of an industrial control system, and a cybersecurity system.
FIG. 1B is a schematic diagram of a first exemplary industrial control system topology with which the cybersecurity system may be implemented.
FIG. 1C is a schematic diagram of a second exemplary industrial control system topology with which the cybersecurity system may be implemented.
FIG. 1D is a schematic diagram of a third exemplary industrial control system topology with which the cybersecurity system may be implemented.
FIG. 2 is a schematic diagram of an exemplary cybersecurity system.
FIG. 3A is a schematic diagram of a first exemplary logging process in a first type of device in an industrial control system.
FIG. 3B is a schematic diagram of a second exemplary logging process in a second type of device in an industrial control system.
FIG. 4 is a flow diagram illustrating a method of producing an accumulated log of events of interest and associated attributes in an industrial control system.
FIG. 5 is a flow diagram illustrating a method of applying an accumulated log of events of interest and associated attributes in an industrial control system to a security application.

### Detailed Description

Industrial control systems are often implemented to facilitate critical processes of a wide variety of industries, such as energy generation, manufacturing, and transportation. However, the operational technology networks underlying the industrial control systems experience a technical challenge with respect to security threats and data provenance. For instance, with complex network topologies consisting of disparate computing devices running various operating systems, tracing a security event to its origin in an industrial control system is technical challenging. Certain aspects and features of the present disclosure relate to a technical solution that provides techniques for monitoring kernel-level events or actions within the operating systems of different types of computing devices to generate a time-ordered event data stream that can be analyzed to identify cybersecurity vulnerabilities (e.g., malicious behavior, vulnerabilities, such as known flaws in the network, device misconfigurations, which can be exploited by a hacker).

In some implementations, one or more logging agents may be stored in a kernel space of an operating system (e.g., WINDOWS) running on operator terminals and supervisory computers (e.g., the first type of computing devices, such as desktop computers). As a non-limiting example, the logging agent may be configured to log certain events or actions that occur within the kernel, such as create, read, update, delete, change the ownership, change the access rights, change file attributes, WINDOWS registry events, process events, user events, network events, removable media detection and prevention events, or any other suitable event within the file system of the operating systems. The logging of certain kernel-level events enables a user to trace the data provenance on the computing device that the agent is configured to track. The events or actions detected at the kernel space may be passed to the user space of the operating system, which may transmit the logged events to a remote server.

In some implementations, one or more logging agents may be stored at a kernel of a real-time operating systems of computing devices, such as PLCs, RTUs, sensors, or actuators (e.g., the second type of computing device). Instead of logging events or actions relating to the file system of an operating system, in these implementations, data signals including the events of the sensors and actuators are logged and processed by the PLC or RTU, and possibly transmitted to one or more Historian servers, which archive the sensor and actuator signals.

These illustrative examples are given to introduce the reader to the general subject matter discussed here and are not intended to limit the scope of the disclosed concepts. The following sections describe various additional features and examples with reference to the drawings in which like numerals indicate like elements, and directional descriptions are used to describe the illustrative embodiments but, like the illustrative embodiments, should not be used to limit the present disclosure. The elements included in the illustrations herein may not be drawn to scale.

The embodiments and implementations described herein may be embodied as a system, a computer-implemented method, and/or a computer-program product. The computer-program product may include a non-transitory computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing or processing devices from a computer readable storage medium or to an external computer or external storage device via a network, for example, one or more of: a wired network, a bus, the Internet, a local area network, a wide area network and/or a wireless network (including short-range communication networks, such as Bluetooth or Zigbee).

Computer readable program instructions for carrying out operations of the present invention may take a range of forms as known to one skilled in the art, and be written in any combination of one or more programming languages. The computer readable program instructions may execute entirely on a local computer, partly on the local computer, as a stand-alone software package, partly on the local computer and partly on a remote computer or entirely on the remote computer or server. In the latter scenario, the remote computer may be connected to the local computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present technology.

Certain aspects and features of the present disclosure may be described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions. Although a flowchart can describe operations of a process in a sequential order, many of the operations can be performed in parallel or concurrently. In addition, the order of the operations can be re-arranged or selectively performed. A process may be terminated when its operations are completed, but could have additional steps not included in the figure that are still within the scope of the present disclosure. A process can correspond to a method, a function, a procedure, a subroutine, a subprogram, and the like. When a process corresponds to a function, its termination may correspond to a return of the function to the calling function, or a main function.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

### CYBER-PHYSICAL SYSTEMS

Certain aspects and features of the present disclosure have been described herein with reference to examples in industrial control system environments. As referred to herein, an industrial control system may generally be understood to mean a networked combination of physical computing elements (e.g., operator terminals and actuators) and computational elements (e.g., executable code) that act together to provide automated control of one or more processes to achieve an industrial objective, such as, for example, manufacturing, transportation, energy generation and distribution, and water treatment and distribution.

It will also be appreciated that there are a number of related technologies and concepts in the area of interacting networks of physical and computational elements. Each of these has significant overlap in terms of capabilities and function, but has different vocabularies and definitions, which imply disparity. Examples of such concepts include: cyber-physical systems, Industrial Internet, Internet of Things, Industrial Internet of Things, Industry 4.0, machine-to-machine (M2M), and others. It has been suggested that these differences have arisen in part due to their origins at different times from within diverse expert communities (e.g., computer science and systems engineering in comparison with networking and information technology), each having a different emphasis or approach to development. However, even within such communities there is a lack of consensus in the precise characteristics, which distinguish between such concepts.

As such, reference to a cyber-physical system herein is intended to be generally understood as a networked combination of physical and computational elements with sensing, computation, and actuation capabilities - and which may also include interactions with humans, for example, as users or operators. Further, unless expressly stated to the contrary, terminology used herein to describe components of a cyber-physical system should be attributed a broad interpretation, rather than implying a limited functionality within a particular field of industry.

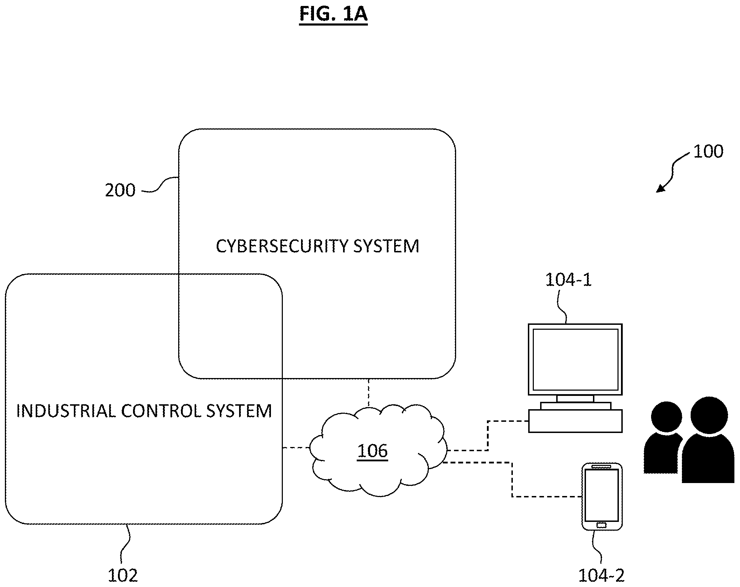

FIG. 1A illustrates an exemplary system 100 in which aspects and features of the present disclosure are implemented. In some implementations, the system 100 may include a cyber-physical system in the form of an industrial control system 102. Non-limiting examples of industrial control system topologies are discussed further below. The system 100 may further include a cybersecurity system 200 for capturing security events and data provenance within the industrial control system 102. At least a portion of the cybersecurity system 200 is provided within and alongside the industrial control system 102, as will become apparent from the further description below.

The cybersecurity system 200 may communicate with one or more user devices 104 (e.g., a workstation or other personal computing device 104-1, or a mobile device such as a smartphone 104-2) via a network 106 potentially comprising various configurations and protocols including the Internet, intranets, virtual private networks, wide area networks, local networks, private networks using communication protocols proprietary to one or more companies - whether wired or wireless, or a combination thereof.

### INDUSTRIAL CONTROL SYSTEMS

Non-limiting examples of industrial control system components and topologies are discussed below. It will be appreciated that these are not intended to be limiting or exhaustive, but are provided to assist with understanding aspects of the present disclosure as discussed further below.

A typical industrial control system contains at least one control loop, human interfaces, and remote diagnostics and maintenance tools operating within a network. A control loop may utilize Programmable Logic Controllers (e.g., sensors, actuators, and controllers) to perform an automated process.

In the context of industrial control systems, sensors output an indication of variables relating to the process being controlled, while actuators are used to physically manipulate the controlled process. Sensors and actuators may also be referred to collectively in the field of industrial control systems as transducers. The controller interprets the signals and generates corresponding manipulated variables, based on a control algorithm and target set points, which it transmits to the actuators.

An industrial control system will often include at least one Human Machine Interface (HMI). In the context of industrial control systems, an HMI (or industrial HMI) is generally understood to be a device providing a specific function. An HMI may include the hardware and executable code that enables human operators to interact with a process, for example to: monitor a process, modify control settings (e.g., set points or control algorithms), send commands, and potentially manually override automated operations under emergency conditions. However, it will be appreciated that the term "Human Machine Interface" may also be used in a broader sense in the context of cyber-physical systems to describe the means by which a human interacts with a machine to provide inputs and/or receive outputs, or in other words the device(s), which provide a user interface within the system.

An industrial HMI within an industrial control system may have bidirectional read/write capability in relation to the process under control, but typically has limited access to functions outside a restricted role (particularly in a distributed control architecture). In contrast, an Engineering Workstation (EWS) typically has less access restrictions and provides tools for communicating with controllers to configure and update them. It is also common for an Engineering Workstation to contain, or have access to, sensitive documentation specific to the ICS design, configuration, and plant operation.

A Data Historian may be used in an industrial control system as a centralized database or repository for storing process data. The data may be used, for example, to produce reports, perform data analysis, and in enterprise level planning.

In distributed industrial control systems, a control server (also referred to in the art as a Master Terminal Unit or supervisory controller) may host the control software that communicates with lower-level controllers (such as Remote Terminal Units and Programmable Logic Controllers) over one or more networks.

A variety of technologies is available for provisioning local control. Programmable Logic Controllers are used extensively in industrial control systems for this purpose. Programmable Logic Controllers have a user-programmable memory for storing instructions for the purpose of implementing specific functions such as I/O control, logic, timing, counting, proportional-integral-derivative control, communication, arithmetic, and data and file processing. Remote Terminal Units can provide similar functionality, but are primarily used within distributed industrial control systems (and more particularly, supervisory control and data acquisition (SCADA) systems) to provide a communications interface at the field site to a remote supervisory computer. Depending on the network topology or requirements of the system, both Remote Terminal Units and Programmable Logic Controllers may be utilized in a control loop, for example.

### Programmable Logic Controller (PLC) topologies

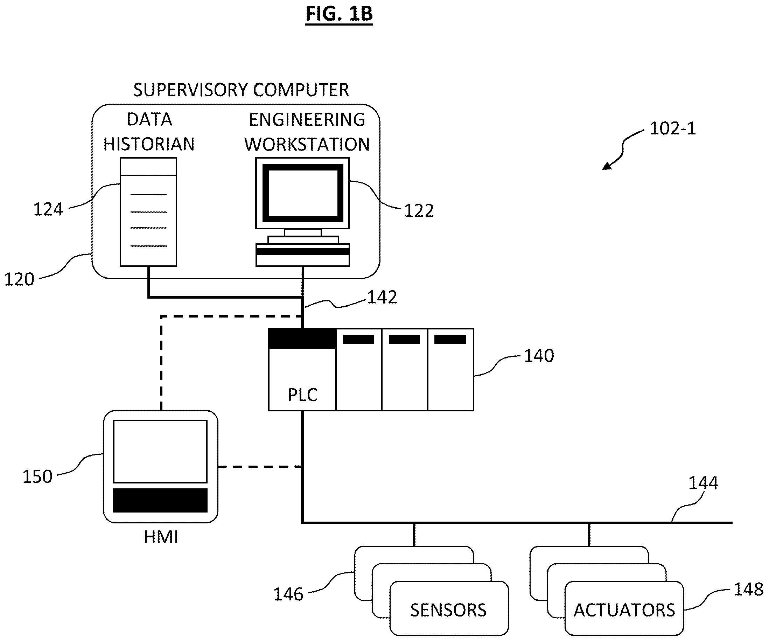

In some examples, aspects and feature of the present disclosure may be implemented in an industrial control system, in which a PLC device is used as the primary control element, particularly in relatively small control system configurations of lower complexity. FIG. 1B illustrates a first exemplary industrial control system 102-1, in which such a network topology is used.

The first industrial control system 102-1 may include a supervisory computer 120 providing the functions of an engineering workstation 122 and a data historian 124. For completeness, it will be appreciated that while the engineering workstation 122 and a data historian 124 are embodied in a single device in this example, alternative examples may be provided in distinct devices (which may be either proximate or distal to each other).

In the example of the first industrial control system 102-1, a controller is provided in the form of a PLC 140. The supervisory computer 120 may be connected to the PLC 140 by a first network, for example, a local area network 142. The PLC 140 communicates over a second network - as a non-limiting example, a bus 144 utilizing protocols, such as Fieldbus or Modbus - with sensors 146 and actuators 148 to implement process control. As per the illustrated example, a Human Machine Interface (HMI) 150 may also be provided in communication over the local area network 142, or the bus 144.

### Distributed Control System topologies

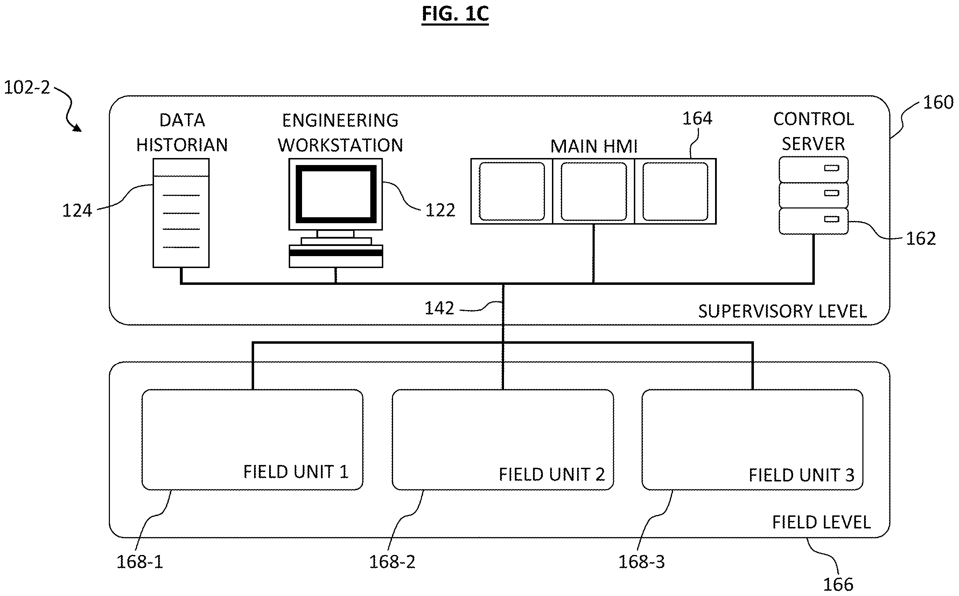

A Distributed Control System (DCS) may provide a supervisory level of control overseeing multiple sub-systems having local controllers at the field level that are responsible for controlling a localized process. The supervisory level of control may mediate the local controllers to share the overall tasks of carrying out an entire process. While control is distributed, the components of such a system may still be provided within the same facility (i.e., at the same physical location). FIG. 1C illustrates a second exemplary industrial control system 102-2, in which such a network topology is used.

In the second exemplary industrial control system 102-2, a supervisory level 160 may include a control server 162, a main Human Machine Interface (HMI) 164, engineering workstation 122 and data historian 124. The supervisory controller (control server 162 in this example) may communicate with a field level 166 of the system 102-2 via a first network, for example, local area network 142. The field level 166 may include a plurality of distributed field units 168-1, 168-2, and 168-3, each having an associated controller responsible for implementing a local control loop, such as a PLC, machine controller, process controller, or single loop controller. Each field unit 168 may further include sensors and actuators according to the aspect of the process being controlled. By way of example, at least one of the field units 168 may be generally configured in the manner of the PLC control loop of the first industrial control system 102-1.

The control server 162 may request data from, and send commands to, the local controllers of the distributed field units 168. The distributed local controllers control their process actuators based on control server 162 commands and sensor feedback.

### SCADA System Topologies

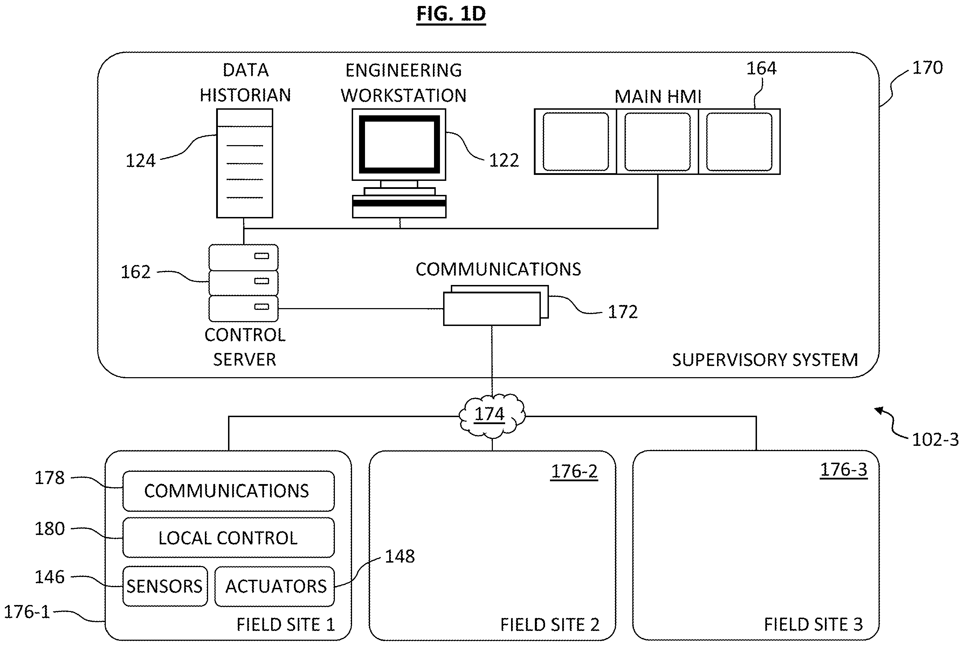

SCADA systems may be used to control dispersed assets via a centralized monitoring and control system. SCADA industrial control systems may typically collect field information, and then transfer the field information to a central supervisory system responsible for monitoring and supervisory control. Local controllers may still be used to provide automated control over control loops at the field level, but generally speaking a SCADA system will emphasize centralized reporting and control to a greater extent than a distributed control system. FIG. 1D illustrates a third exemplary industrial control system 102-3 in which such a network topology is used.

In the third exemplary industrial control system 102-3, a centralized supervisory system 170 may include a control server 162 (which may be referred to as a Master Terminal Unit) networked with a main Human Machine Interface (HMI) 164, engineering workstation 122 and data historian 124. The centralized supervisory system 170 may include one or more communications devices 172 to enable communication over one or more communication networks 174, potentially using a range of wired and wireless systems, with a plurality of field sites 176-1, 176-2, and 176-3.

Each field site 176 may include communications hardware 178, and at least one local control element 180 (e.g., RTUs and/or PLCs), which monitors sensors 146 and controls actuators 148. The centralized supervisory system 170 may store and process the information from RTU inputs and outputs, while the RTU or PLC may control the local process. For completeness, it will be appreciated that there exists a wide range of industrial control system designs, and the exemplary industrial control systems 102-1 through 102-3 described herein are not intended to be limiting or exhaustive. By way of example, a field site 176 may include an Intelligent Electronic Device (e.g., a protective relay) configured to bypass a local RTU and communicate directly to the centralized supervisory system 170, in contrast with a local RTU being used to poll the Intelligent Electronic Devices to collect the data and pass the data to the centralized supervisory system 170.

The centralized supervisory system 170 may collect and log information gathered by the field sites 176, display information on the main HMI 164, and may generate actions based upon detected events. The centralized supervisory system 170 may also be responsible for centralized alarming, trend analyses, and reporting, and may interact with enterprise level systems for these purposes among others.

### Networking

Traditionally, industrial control systems have used wired connections between components of the operational technology networks. Such wired connections may provide a secure, reliable, high-speed communication medium with a lower susceptibility to interference or interruption than wireless technologies. It will be appreciated that aspects of the present disclosure may be implemented in systems utilizing wired connections between two or more devices, for example, with a view to time synchronization across a network as discussed further below.

However, it will be appreciated that the present disclosure is not limited to device communication over wired connections. In some implementations, the devices of a cyber-physical systems may utilize wireless communication, for example, in the application of Internet of Things.

### Vulnerabilities in an Industrial Control System

It will be appreciated that regardless of the network topology, any given industrial control system may be vulnerable to threat actors from a wide range of attack vectors. In addition to direct physical attacks down to the field level, various elements within the system may be used to remotely gain access to other elements through a variety of means. Further, the supervisory level may also be in communication with corporate or enterprise IT systems. This exposes the industrial control system to a range of additional attack vectors. Additionally, an industrial control system may be heavily reliant on transmission of data, however, the various devices and protocols utilized for this purpose introduce additional vulnerabilities.

Given this wide range of attack vectors, a number of which are reliant on bypassing physical security and human behavior, there is a degree of inevitability that a motivated threat actor can gain access to an industrial control system. As such, cybersecurity for industrial control systems should seek to ensure safety, reliable supply and business continuity in the presence of intrusion.

For example, one of the primary attack vectors of a network attack is modifying the control logic to disrupt or terminate the controlled process. For many industrial control systems, this would occur through the modification or replacement of technical files dictating operation of the PLC. Current approaches in cybersecurity for industrial control systems do not capture data provenance and cybersecurity events happening within and across the system to allow for detection of such activity - let alone in a timely manner to enable a rapid, preventative or remedial response. It is an aspect of the present disclosure to enable a high degree of security visibility through granular kernel-level logging of events of interest, such as data provenance events and security events. It is a further aspect of the present disclosure to enable near real-time monitoring of such events.

To illustrate and only as a non-limiting example, an attacker may access an industrial control system, which includes a desktop computer that serves as an operator terminal running the WINDOWS Operating System and a PLC device running a real-time operating system, which defines a kernel space and a user space. Then, the attacker may open a file in a PLC device (or open a configuration file of a PLC device on an engineering workstation) and change a setting value for a temperature or alter timestamps of a pasteurization process in a dairy company. The attacker may also access the operator terminal to change the file permissions of a sensitive file to enable the attacker to read and edit the sensitive file. The file system activity the attacker performed on the operator terminal may be automatically detected at the kernel space by a logging agent stored in the kernel of the operator terminal. Additionally, the file activity the attacker performed at the PLC device can be automatically detected at the kernel space by the logging agent stored in the kernel of the PLC device and passed to the user space of the PLC device for logging and transmitting to a remote server. The remote server can be configured to incorporate the file permission change detected at the operator terminal and the file activity detected at the PLC device into a time-ordered event data stream. According to certain embodiments, the remote server may monitor the time-ordered event data stream to detect that the file activity of the operator terminal and the PLC device are anomalous. Additionally, certain embodiments involve logging and monitoring changes that occur at the memory level of the PLC device, for example.

### CYBERSECURITY SYSTEM

In some implementations, a cybersecurity system 200 may be provided to capture security events and data provenance within a cyber-physical system, such as an industrial control system 102.

Reference to data provenance should be understood to mean a record of the ultimate derivation and passage of an item of data through various owners or custodians. A data provenance record can include information about creation, update, transcription, abstraction, validation, and transferring ownership of data, and the like. As such, a data provenance event may be any action associated with access and/or transformation of the data and associated files. By way of example, data provenance may record specific create, read, update, or delete (CRUD) actions to data, including identifiers to the machine, user, processes and files involved.

Certain events within a cyber-physical system may be relevant to the security of the system without resulting in an interaction with data or files of particular interest. For example, user account login events, events within network logs, events within system logs relating to performance (e.g., CPU usage statistics). Such events may be referred to herein as "security events."

Reference may be made herein to "events of interest." An event of interest should be understood to mean an event within the cyber-physical system for which it is desirable to collect and log associated information - particularly, at the kernel level. It should be appreciated that, while the term may be used to refer to data provenance events and security events collectively, this is not intended to be limiting to all embodiments of the present disclosure.

In some implementations, an apparatus and related methods to track security and data provenance events in industrial control systems at high time precision may be provided. For example, an industrial control system may generate data signals across all levels of abstraction and control. Such data signals may form security and data provenance events within a single physical location or across several physical locations using the SCADA and DCS architectures to control automation. One or more instances of the apparatus may be embedded within the industrial control system and may record security and data events at high-precision timestamps across operation and information technologies as event logs (e.g., log records or log entries). Logs may be stored locally or transmitted to be stored within storage servers within or outside industrial control system environments. The logs may include information that enables a server to perform near or substantially real-time situational awareness, anomaly detection, threat forecasting, security attribution, and other suitable cybersecurity functionality.

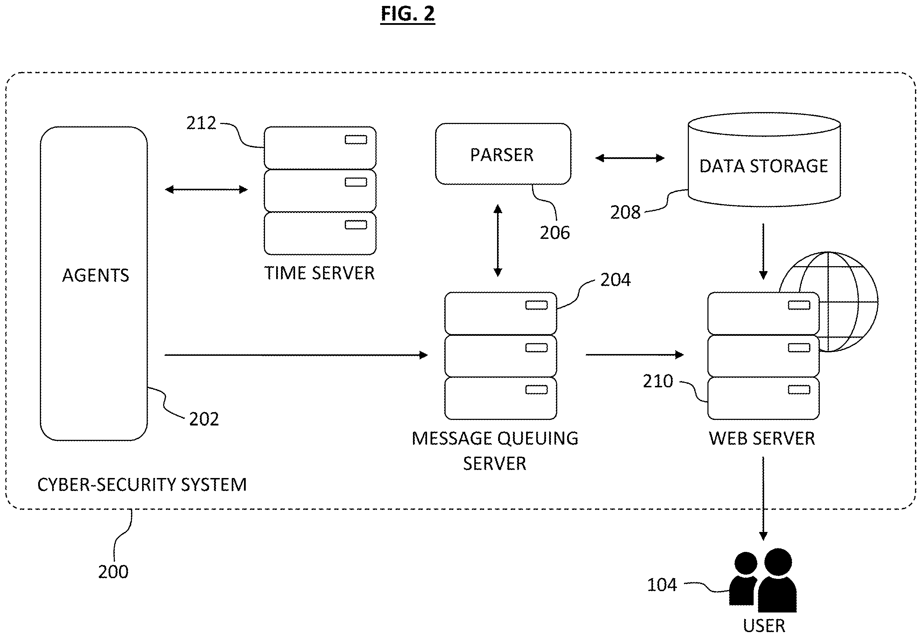

As illustrated in the example of FIG. 2, the cybersecurity system 200 may include logging agents 202. The logging agents 202 may be modules loaded within the kernel of each computing device of interest of the industrial control system 102. Logging agents 202 may include logic stored in the kernel of a first type of computing device (e.g., a desktop computer serving as an operator terminal running a WINDOWS operating system) or a second type of computing device (e.g., an actuator running a real-time operating system). The logging agents 202 may be configured to monitor the events detected by the kernel for certain events of interest and generate a log entry for each detected event of interest. In certain embodiments, an event of interest may be an event that satisfies a monitoring condition for which the logging agents 202 are configured to detect. A monitoring condition may be defined in advance and may be used to evaluate each detected kernel-level event to determine whether the detected kernel-level event is an event of interest of a predefined type that is to be logged. As an illustrative example, the monitoring condition may be a rule included in the logic of the logging agents 202 to monitor the detected kernel-level events for file permission changes and log any detected file permission change events. However, if the monitoring condition detects a different type of kernel-level event, such as certain Input/Output request packets, the logging agents 202 may not log the detected event for transmission to the user space. As further discussed below, in certain examples, the cybersecurity system 200 may include different types of logging agents 202 for different devices.

The cybersecurity system 200 may include a message queuing server 204 configured to receive log entries from the logging agents 202, and transmit these to a parser 206 for parsing prior to storing the parsed log entry information in data storage 208. The cybersecurity system 200 may further include a data analysis and presentation device in the form of a web server 210. The web server 210 may be configured to analyze and visualize the accumulated log entry information for presentation to one or more users via the user devices 104. A time server 212 may be provided for synchronization of the logging agents 202, as described further below. In some implementations, the time server 212 may be a physical server that communicates with some or all devices within the industrial control system. In other implementations, the time server 212 may be executable code configured to maintain an accurate time. In either case, the time server 212 is used to prevent against timestamp drift within a complex network of devices. In some implementations, the time server 212 may be used to synchronize computing devices within one or more industrial control systems that may be collocated or may be located in different geographical regions. As described herein, time drift is a problem that may occur in an industrial control system. Time drift may complicate the analysis of logs when logs from different devices are collected for data analytics, for example, using machine learning. In some implementations, the time drift issue may be resolved by synchronizing the clocks of each device with hardware time servers in the local network environment when the device is initiated (i.e., at the boot-up stage). The devices would then synchronize with the clock of the hardware time server at a very high precision. Next, when the clock synchronization is completed, the logging agent running in the kernel of the device may begin logging within its embedded environment and append the high-precision timestamp to each event entry into the log.

It will be appreciated that one or more of the components of the cybersecurity system 200 located within the industrial control system 102 may be embodied in one or more physical devices. In some examples, the message queuing server 204, parser 206, data storage 208, web server 210, and time server 212 may be provided in standalone machines, or in one or more shared machines.

It is envisaged that such devices may be dedicated to the cybersecurity system 200 and have highly restrictive controls in place with regard to access and functionality. In some examples, the physical packaging of such devices may have tamper-resistant and tamper-evident features. Further, in some examples, a logging agent 202 may be configured to leverage the Trusted Platform Module (TPM) found in the hardware of the device on which it is installed by deriving a hash signature from the TPM.

### Logging agents

A number of components of an industrial control system may be implemented as one or more software tools or applications in a computing device running an Operating System, such as MICROSOFT WINDOWS, UNIX, mobile Operating Systems (e.g., ANDROID, iOS, etc.) or LINUX, for example, to provide Human Machine Interfaces, Engineering Workstations, Data Historians, and Control Servers. These components may be implemented in a single device, or distributed across a plurality of devices, depending on the requirements and design of a particular industrial control system. Such computing devices are referred to herein as a first type of computing device.

Other components of an industrial control system, particularly dedicated lower-level controllers such as sensors, actuator, PLCs, and RTUs, may run on real-time operating systems, such as MICROWARE OS-9, WIND RIVER VXWORKS, or Microsoft Windows CE or Embedded Compact. Such computing devices are referred to herein as a second type of computing device.

The second type of device can have limited processor memory and processing power, and overhead constraints may place limitations around the extent to which activity at the device can be monitored and logged. However, such devices still present an opportunity to gather information which may be used to provide a deeper level of detail to the data and event life cycle information of the wider system.

In some examples, a logging agent may be configured to monitor events of interest at the kernel-level of the Operating System of the computing device on which it runs. The kernel manages all the core actions required of a system, for example, file system management, memory management, input-output, and other suitable actions. Operating at the kernel-level allows for examination of the atomic actions in an operating system (more particularly, system calls). This provides a very high granularity record of relevant events within the system. This also provides greater opportunities for detection and tracing of potential security threats.

In some examples, the logging agent of a particular computing device may be configured to detect a kernel-level event (e.g., one that is an event of interest as determined by using a monitoring condition) and any metadata (e.g., a time stamp or an identifier) associated with the kernel-level event, and transfer the detected event and the associated metadata to the user space of the operating system running on the particular computing device. The user space may include a network daemon that transmits the logged event and/or the associated metadata to a remote computing device (e.g., a remote server) without further analysis. It may be generally desirable to minimize processing at the kernel of the computing device hosting the logging agent to assist with maintaining precision of timestamping, particularly in view of the level of granularity at which the logging agent is operating, as discussed further below.

It will be appreciated that implementation of the logging agent for a particular device may depend in part on the operating system running on that device, and the associated kernel design and architecture. However, discussion of exemplary forms of the logging agent and operation in different device types is provided as non-limiting examples for the purposes of illustration and to assist with understanding.

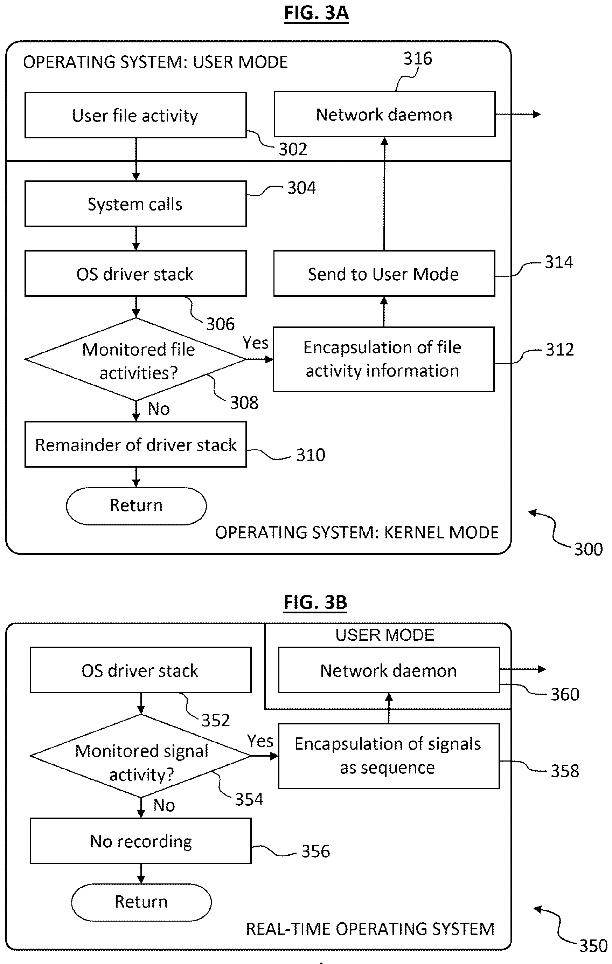

FIG. 3A illustrates an exemplary process 300 by which the logging agent provides a log entry on a first type of device, for example, a computing device running a MICROSOFT WINDOWS-based Operating System, on which the HMI 150 is implemented. In the first type of device, the logging agent may be configured to monitor user-level activity 302; more particularly, as a non-limiting example, user file activities such as 'create', 'read', 'update', and 'delete' (CRUD) types of actions. These activities have associated system calls 304 (e.g., in the form of input/output requests) to access kernel-level processes. In a WINDOWS Operating System, system calls 304 linking to user file activities are transmitted to a device driver stack 306 that includes a plurality of drivers. The logging agent uses a predefined monitoring condition to detect certain file activity (e.g., events of interest) as the system calls 304 are processed by registering relevant drivers - for example, using a filter manager 308 - to hook the system call. For example, in operating systems, the drivers that participate in I/O requests may be collectively referred to as the driver stack. The logging agent may evaluate the driver stack for any drivers that are associated with a detected kernel-level event. If one or more drivers are identified, then the logging agent collects attributes (e.g., metadata) associated with the kernel-level event, and then transmits the collected information for entry into a log. Advantageously, this hooking mechanism captures and logs system calls of the device at the kernel level, which provides a granular record of relevant events within the system. Again, tracing system calls at the kernel level also provides greater opportunities for detection and tracing of potential security threats.

If the system call is not relevant, or hooking is completed, it is processed by the remainder of the driver stack 310. If relevant file activity is triggered, related system calls are hooked and encapsulation 312 of related information is performed to create a new log entry. For each event of interest, one or more attributes of the event may be obtained. Non-limiting examples of attributes (e.g., metadata) of the event may include timestamp information, system call information, user information, location information, device information, process information, file information, or data change information. It will be appreciated that a wide range of system calls may be relevant to security and data provenance events within the industrial control system. In some implementations, the system calls that are identified as relevant may be user defined. Table 1 below is an exemplary and non-exhaustive list of example systems calls that may be hooked for the purpose of capturing in a log entry.

**Table 1**

| | |
|---|---|
| CreateProcess() | A new process is created using this command |
| ExitProcess() | This system call is used to exit a process. |
| CreateFile() | A file is created or opened using this system call. |
| ReadFile() | Data is read from the file using this system call. |
| WriteFile() | Data is written into the file using this system call. |
| CloseHandle() | This system call closes the file currently in use. |
| SetTimer() | This system call sets the alarm or the timer of a process |
| CreatePipe() | A pipe is created using this system call |
| SetFileSecurity() | This system call sets the security for a particular process |
| SetConsoleMode() | This sets the input mode or output mode of the console's input buffer or output screen buffer respectively. |
| ReadConsole() | This reads the characters from the console input buffer. |
| WriteConsole() | This writes the characters into the console output buffer. |

The new log entry is sent 314 back into the user mode of the operating system. From the user mode, a network daemon 316 transmits the new log entry to a remote device for further processing (e.g., to a message queuing server 204). In some examples, the new log entry may not be stored locally on the computing device, and may be transmitted from the user mode out to the message queue as soon as possible. This may assist with reducing overhead associated with the logging agent, and therefore, reduces the likelihood of performance of the computing device being negatively impacted. It will be appreciated that alternative examples are contemplated in which a temporary local storage or cache of the new log entry, for example, in the user space is performed. It will also be appreciated that the encapsulation of the event metadata at 312 may be performed at the user space, instead of the kernel space, to reduce the activity performed in the kernel space.

FIG. 3B illustrates an exemplary process 350 by which the logging agent provides a log entry associated with a kernel-level event detected on a second type of device - for example, an actuator, a sensor, or a PLC or an RTU running a real-time operating system. With respect to the second type of device, it is envisaged that the logging agent may primarily monitor for events at the kernel level in the forms of signals from sensors (although it is also envisaged that signals output to actuators may also be of interest). In an exemplary form, a driver stack 352 may be monitored 354 for relevant file activity (e.g., events of interest), and no information recorded 356 if no relevant activity is detected. If relevant activity is detected (e.g., when a data signal or detected event satisfies a predefined monitoring condition, such as a voltage is detected), related information is encapsulated 358 to create a new log entry. Non-limiting examples of events of interest may include analog inputs (such as, from current sensors, voltage sensors, temperature sensors), digital inputs (such as, from photo sensors, push-button, limit switches, relay contacts, proximity switches, changes in memory, or pressure switches by way of example), and high-speed counters. In some implementations, one or more logging agents may be installed in a kernel space of a real-time operating system to hook system calls detected at a second type of computing device, and the detected kernel-level event (e.g., a data signal indicating a voltage detected at a sensor) may be transmitted from the kernel mode to the user mode of the real-time operating system for forwarding to a remote server. However, the present disclosure is not limited thereto. In some implementation, the real-time operating system may not necessarily make system calls that correspond to I/O requests for kernel processes. In these implementations, the logging agents may be configured to hook or capture events of any type that may or may not satisfy a monitoring condition.

In some implementations, monitoring signals from a sensor, actuator, PLC, or RTU controller may include continuously storing logs containing one or more detected events in a sequential order based on a timestamp representing a time that an event was detected. The amount and order of event logs may depend on the PLC systems installed. For example, analog or digital values may be recorded at a time interval (e.g., once a second) in a log as values in sequential order. Further, a log line may be processed by one or more message queueing servers, such as message queuing server 204. In some implementations, the logging agent(s) of a second type of computing device may detect a kernel-level event within the kernel space of the real-time operating system, and then may transmit the kernel-level event and any associated metadata to the user mode of the real-time operating system to store the kernel-level event and the associated metadata in one or more logs. The one or more logs may then be transmitted from the user mode (e.g., by a network daemon 360) to one or more data stores or remote servers immediately after each event is detected. In other implementations, the logging agent(s) of the second type of computing device may detect a kernel-level event within the kernel space of the real-time operating system, and may also capture the detected kernel-level event in a log entry within the kernel space. In these implementations, the logged entry may be transmitted to the user space of the real-time operating system for forwarding to a storage device or remote server (e.g., in a cloud network). Each single analog or digital signal value may be a sampling from a continuous data signal that is periodically captured or included in a single data entry or row in a log record. After being stored at the one or more data stores, the logs can be further compressed at a high compression rate or otherwise processed.

As a non-limiting example, for PLC devices (and the like), the format of log records may be defined by any one or more of the following: the device identifier, the changed file name including the file path, the timestamp of file activity, the file activity conducted (e.g. open, read, etc.), IP address, the Media Access Control (MAC) address, user attributes, and any suitable form of information that can be captured as contributing information for data provenance of the PLC. As another non-limiting example, for a sensor running a real-time operating system, the format of a log record may be defined by any one or more of the following: the device identifier, the value of a continuous data signal at a given time within a periodic sampling time interval, the timestamp indicating a time at which the value was sampled from the continuous data signal, and any other suitable information that can be captured for data provenance of the sensor.

The new log entry is transmitted to a remote device for further processing (e.g., to message queuing server 204) using a network daemon 360 provided within the user space of the real-time operating system. As with the first type of logging agent, the new log entry may not be stored locally on the device. It is envisaged that this may be of particular importance in the second type of device, where resources are typically limited and there is a strong motivation to avoid impacting performance.

### Hooking

In some implementations of aspects of the present disclosure, monitoring for events of interest and obtaining associated information (e.g., of attributes of the event) may include intercepting function calls or messages or events passed between software components at the kernel level of an operating system. The term "hooking" will be used herein to describe such activity. For completeness, it should be noted that "hooking" may be used in the field of computer programming to describe a subset of techniques which may be distinguished from others achieving a similar outcome. For example, in some instances, the MICROSOFT WINDOWS minifilter driver architecture is described as an alternative to hooking. Reference to "hooking" herein is used in an inclusive sense. It will further be appreciated that operating systems differ in kernel design and architecture, and therefore the means by which hooking is performed will vary. Examples described herein are not intended to be limiting to all embodiments.

In some examples, in contemporary MICROSOFT WINDOWS Operating Systems, the logging agent may deploy minifilter drivers filtering input-output (I/O) operations. A minifilter driver registers a callback routine with a filter manager for each type of I/O operation to be monitored. On intercepting an I/O operation, the filter manager calls the appropriate callback routine for each minifilter driver that registered for that operation in order of altitude.

In some examples, in LINUX Operating Systems, the logging agent may utilize tracepoints to identify specific locations of interest in an application where tracers can be hooked to inspect code execution and data.

In some examples, in a real-time operating system, such as FreeRTOS, trace hook macros may be used to monitor the behavior and timing of the application and operating system. Non-limiting examples of such events may include task creation and deletion; task switch in and out; task delay; task priority change; task suspend and resume; Queue, Semaphore and Mutex creation and deletion; calls to Queue, Semaphore or Mutex APIs. In some examples, a trace hook macro may be defined to associate a digital output (e.g., a voltage detected by a sensor or an angular movement of an actuator) with a task (e.g., operational, paused, or failure). The task that the second type of computing device is executing may be inferred from the output detected at the kernel space of the computing device. The output and the associated task may captured as a log entry or the output may be captured as a log entry and the associated task may be identified later, for example, by an application in the user space or by a remote server.

It will be appreciated that, in certain embodiments, computing devices of the second type may not be configured to differentiate between a kernel space and a user space. For instance, certain real-time operating systems may fully separate the kernel space and the user space by preventing a user or application in the user space from accessing kernel resources. As another example, certain real-time operating systems may partially restrict user or application access to kernel resources by providing access to users or applications through a system call (e.g., a syscall). In yet another example, certain real-time operating systems may provide user services and kernel services in a single address space. Any of these examples may be implemented in certain embodiments of the present disclosure to log kernel-level events in a kernel-space and transmit the logged events to a remote server using, for example, a network daemon. Additionally, while FIG. 3B illustrates that the network daemon 360 is included in the user mode, it will be appreciated that any component illustrated or not illustrated in FIG. 3B may be included in the user space.

### Timestamping

In a general sense, industrial control systems may be distributed computing environments. That is, the various devices being monitored by aspects of the present disclosure are provided in physically distinct hardware. Time drift will inevitably occur between the clocks of those devices and result in inaccuracies in the order of timestamped event logs once accumulated, if not otherwise corrected for. Such inaccuracies in timestamping have implications for subsequent analysis and other uses of the information. Firstly, the fine granularity of the accumulated event logs presents a significant challenge in ensuring accuracy of any corrections. Secondly, even if the inaccuracies can be corrected, this introduces an additional computational burden on the system. In addition to potentially requiring additional resources, such processing may introduce latency in making the accumulated log available for further processing. Thirdly, any correction of inaccuracies may involve the need to alter or otherwise tamper with log records, thereby impacting the integrity of the log records.

As such, an object of certain aspects of the present disclosure is to reduce time error between devices, in which the logging agents operate. In some examples, each logging agent may be configured to synchronize with a remote clock source (e.g., hardware time server 212). By way of example, synchronization may be performed using a protocol, such as Network Time Protocol (NTP) or Precision Time Protocol. In addition to providing accurate synchronization, such protocols may assist in achieving a high precision suited to the granularity of the event logs collected. According to certain embodiments, the system may include an NTP server connected to all devices within the system so as to synchronize the time among the devices in the internal network. Advantageously, in these embodiments, the NTP server enhances the time precision and synchronization across devices in the system.

In exemplary embodiments, the system may include at least one hardware time server in the local network environment of the monitored devices. It is envisaged that such an approach may have particular application to wired networks with a lower susceptibility to delays than wireless equivalents. Such wired networks are relatively common in industrial control system topologies, and as such it is envisaged that such an approach may be well suited to a large proportion of installations. For completeness, it will be appreciated that this is not intended to be limiting to all implementations of the present disclosure and that, in some examples, synchronization may be performed over a wireless network.

In some examples, a logging agent may be configured to perform time synchronization at initiation of the device on which it runs (i.e. during boot-up stage). In examples, a logging agent may be configured to perform time synchronization periodically, or on triggering by an event. When the synchronization is completed, the logging agent may start its logging within its environment and append the high-precision timestamp to each event entry into the log.

### System Operation

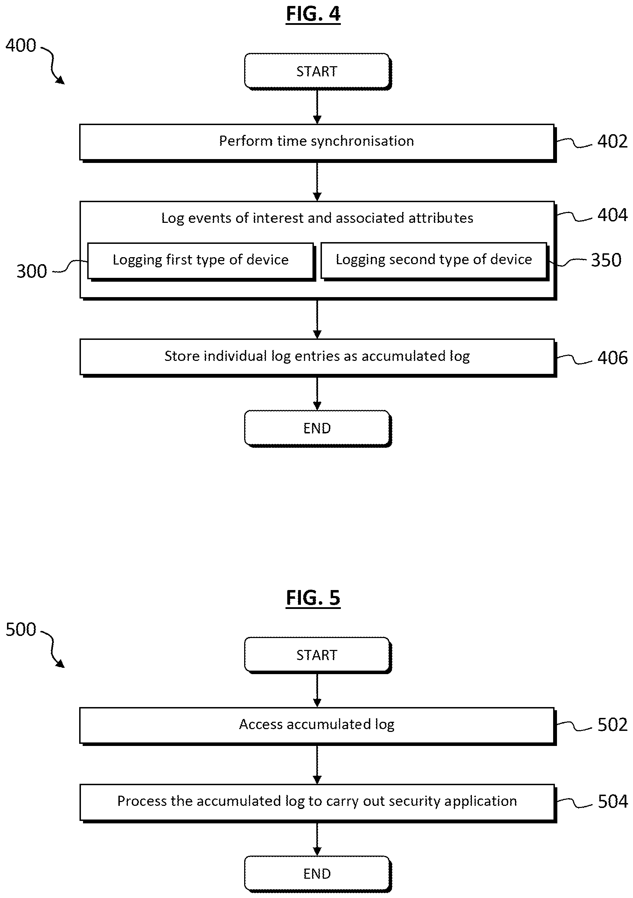

FIG. 4 illustrates an exemplary method 400 of producing an accumulated log of events of interest and associated attributes in the system 100 including the industrial control system 102 and the cybersecurity system 200. In a first step 402, time synchronization is performed between devices hosting logging agents 202 and the time server 212. In a second step 404, the logging agents perform the respective processes 300 and 350 to log events of interest detected in a kernel space of the first type of device or the second type of device, respectively, and transmit any new log entries to the message queuing server 204 from a user space, such as from a network daemon provided in the user space of either the first type of device or the second type of device. In a third step 406, the message queuing server 204 sends the new log entries to the parser 206 for extraction of information and storage of the extracted information in data storage 208 as an accumulated log.

The continuous logging of events and updating of the accumulated log effectively provides a time ordered event data stream. The aspects of the present disclosure enables this to be provided in substantially real-time (e.g., within a time frame of sub-seconds, seconds, or minutes). Various event processing techniques may be applied to the time ordered event data stream, particularly for security purposes.

FIG. 5 illustrates an exemplary method 500 of applying an accumulated log of events of interest and associated attributes in an industrial control system to a security application. In a first step 502, a computing device such as web server 210 accesses the accumulated log of events of interest and associated attributes produced by method 400. In a second step 504, the web server 210 processes the accumulated log using one or more tools to carry out one or more security applications.

### Applications of Accumulated Logs

It is envisaged that the accumulated logs may be utilized for a range of security applications including, for example: near real-time situational awareness, anomaly detection, threat forecasting, and security attribution.

For example, malware targeting industrial control systems are known to include the ability to read and write programs, read and write individual functions and query the state of field controllers via HMIs. One known example contained the capability to communicate with controllers and remotely reprogram them with an attacker-defined payload. That example added an attacker-provided program to the execution table of the controller, leaving legitimate programs in place and apparently expecting the controller to continue operating without a fault or exception. If the controller failed, the malware would attempt to return it to a running state to avoid detection. If the controller did not recover within a defined time window, the malware would overwrite the malicious program with invalid data to cover its tracks.

In an exemplary embodiment, aspects of the present disclosure may be used to detect such anomalous behavior through the high granularity of event data - that is, within a window before the malware had an opportunity to remedy the anomaly to mask its presence. Further, the data provenance aspect of the present disclosure would allow for tracing of activity relating to operation of the malware and its origin within the monitored system. This may be used for visualization of behavior of the malware - whether for near real-time situational awareness, or subsequently replayed for analysis purposes. This may also be used to improve anomaly detection capabilities of the system, for example, through training of machine-learning algorithms. For example, the machine-learning algorithms may include one or more techniques, such as an ensemble of multi-label classifiers (e.g., supervised or unsupervised learning), artificial neural networks (including backpropagation, Boltzmann machines, etc.), Bayesian statistics (e.g., Bayesian networks or knowledge bases), logistical model trees, support vector machines, information fuzzy networks, Hidden Markov models, hierarchical clustering (unsupervised), self-organizing maps, clustering techniques, and other suitable machine-learning techniques (supervised, semi-supervised, or unsupervised).

A variety of techniques for visualization of cybersecurity events may be used. It is envisaged that aspects of the present disclosure may enable such visualizations to be presented at a higher level of granularity, providing greater clarity to viewers as to the behavior of attackers within the targeted system.

### EXAMPLES OF OTHER CYBER-PHYSICAL SYSTEMS

As noted above, various aspects of the present disclosure described in the context of industrial control systems may also have application to other cyber-physical systems. The following are provided by way of non-limiting and non-exhaustive examples of alternative cyber-physical systems.

As a first example, Building Management Systems (BMS) provide automated control of various functions of a facility such as the following: heating, power, air conditioning, lighting, video surveillance, elevators, access controls and perimeter security. Many of the elements of such systems are comparable to an industrial control system, including automated control elements such PLCs, and field devices such as sensors and actuators. Accordingly, such systems may be targeted by threat actors using comparable attack vectors to an industrial control system.

As a second example, aspects of the present disclosure may have application to the medical or healthcare systems - particularly cases in which medical devices communicate with remote computing resources for data collection and/or monitoring purposes, and potentially allow for control of treatment or therapy provided by the device. For example, robotic surgical systems utilizing robotic manipulators are known for both "on-site" surgery and telesurgery from a remote location.

As a third example, aspects of the present disclosure may have application to security of automated teller machines (ATM). Such machines may be physically targeted in addition to being subjected to network-based attacks, and it is envisaged that monitoring in accordance with embodiments described herein assist in rapid detection and prevention of attempts to compromise the machines themselves (e.g., "jackpotting" in which ATMs are exploited to dispense cash).

As a fourth example, aspects of the present disclosure may have application to security of point of sale electronic payment systems, for example, electronic funds transfer at point of sale (EFTPOS) systems. Such systems typically include physical devices for reading of payment card/devices and user input (e.g., key pads), and are also in communication with merchant terminals and payment networks.

As a fifth example, aspects of the present disclosure may have application to security of electronic voting systems, in which voting machines may communicate over local networks and the internet to transmit and record vote data.

Again, the above examples are not exhaustive and do not limit the present disclosure. Other applications not described above may be within the scope of certain embodiments of the present disclosure.

### OTHER REMARKS

Throughout this specification, the words "comprise" and "include", or variations thereof such as "comprises" and "includes" or "comprising" and "including", will be understood to imply the inclusion of a stated element, integer or step, or group of elements integers or steps, but not the exclusion of any other element, integer or step, or group of elements, integers or steps.

The various steps or acts in a method or process described in connection with the present disclosure may be performed in the order shown, or may be performed in another order. Additionally, one or more process or method steps may be omitted or one or more process or method steps may be added to the methods and processes. An additional step, block, or action may be added in the beginning, end, or intervening existing elements of the methods and processes. It is to be understood that one or more features of any one example described herein may be combinable with one or more features of another example or other examples. In addition, any single feature or combination of features in any of the examples may constitute a further example.

Reference throughout this specification to an "aspect" (or the like, such as feature) means that a particular feature, structure, or characteristic described in connection with the aspect is included in at least one aspect of the disclosure. Thus, appearances of the phrases "in one aspect" or "in an aspect" or the like in various places throughout this specification are not necessarily all referring to the same aspect.

Furthermore, the described features, structures, or characteristics may be combined in any suitable manner in at least one embodiment. In the foregoing description, numerous specific details are provided to give a thorough understanding of the exemplary embodiments. One skilled in the relevant art may well recognize, however, that embodiments of the disclosure can be practiced without at least one of the specific details thereof, or can be practiced with other methods, components, materials, et cetera. In other instances, well-known structures, materials, or operations are not shown or described in detail to avoid obscuring aspects of the invention.

It is therefore to be understood that numerous modifications within the scope of the appended claims may be made to the illustrative examples and that other arrangements may be devised without departing from the scope of the claims.

## Claims

1. A computer-implemented method for logging and monitoring kernel-level events in an industrial control system (102), comprising:
loading a logging agent (202) to a kernel of an operating system executing on a first computing device (140, 146, 148) of the industrial control system (102), the logging agent (202) being configured to detect kernel-level events occurring at the first computing device (140, 146, 148), and the operating system being configured to define a kernel space and a user space of the first computing device (140, 146, 148);
detecting a kernel-level event, at the first computing device (140, 146, 148), using the logging agent (202) loaded to the kernel, the kernel-level event being **characterized by** an attribute, and the kernel-level event being detected in the kernel space; the method being **characterized by**:
determining whether the detected kernel-level event satisfies a monitoring condition, the monitoring condition identifying at least one kernel-level event to log, and the determination being performed in the user space;
in response to determining that the detected kernel-level event satisfies the monitoring condition, generating (404) a log record that encapsulates the detected kernel-level event and the attribute, and the log record being generated in the user space; and
transmitting the generated log record from the user space, wherein, upon receiving the log record, the detected kernel-level event and the attribute are combined with one or more other log records from one or more second computing devices (140, 146, 148) into a time-ordered event data stream configured to be evaluated by a remote server.

2. The computer-implemented method of claim 1, further comprising:
detecting a data signal using the first computing device (140, 146, 148), the data signal being detected in the kernel space of the first computing device (140, 146, 148), and the first computing device (140, 146, 148) executing a real-time operating system; and
encapsulating the data signal as a log record, the encapsulation being performed in the user space.

3. The computer-implemented method of claim 2, wherein the first computing device (140, 146, 148) is a sensor (146), an actuator (148), a programmable logic controller, or a remote terminal unit of the industrial control system (102).

4. The computer-implemented method of claim 2, wherein the data signal is associated with an event, and wherein the generated log record includes a value associated with the data signal and the event associated with the data signal.

5. The computer-implemented method of claim 1, wherein detecting the kernel-level event using the logging agent (202) further comprises:
identifying one of more user file activities (302) being performed in the user space of the operating system executing on the first computing device (140, 146, 148);
detecting one or more system calls (304) that are triggered at the kernel space in response to the one or more user file activities (302) being performed in the user space, each system call (304) of the one or more system calls (304) corresponding to a user file activity (302) of the one or more user file activities (302), and each system call (304) of the one or more system calls (304) corresponding to an input/output (I/O) request associated with a kernel-level process;
filtering the one or more system calls (304) using a device driver to determine which kernel-level event to monitor for security vulnerabilities; and
encapsulating at least one user file activity (302) in a log record when the at least one user file activity (302) corresponds to the device driver.

6. The computer-implemented method of claim 5, wherein the first computing device (140, 146, 148) is an operator terminal or supervisory computer of the industrial control system (102).

7. The computer-implemented method of claim 1, wherein the generated log record is received at the remote server, wherein the remote server additionally receives the one or more other log records, wherein the remote server generates the time-ordered event data stream that includes the generated log record and the one or more other log records in a sequence, such that a position of the generated log record or the one or more other log records in the sequence is based on a timestamp associated with each of the generated log record or the one or more other log records, wherein the generated log record is generated by a first type of computing device and the one or more other log records are generated by either the first type or a second type of computing device, and wherein each of the first type of computing device and the second type of computing device are included in the industrial control system (102).

8. A system for logging and monitoring kernel-level events in an industrial control system (102), , comprising:
one or more processors of the industrial control system (102); and
a non-transitory computer-readable storage medium containing instructions which, when executed on the one or more processors, cause the one or more processors to perform operations, wherein the operations include:
loading a logging agent (202) to a kernel of an operating system of the industrial control system (102), the logging agent (202) being configured to detect kernel-level events occurring at the kernel of the operating system, and the operating system being configured to define a kernel space and a user space;
detecting a kernel-level event using the logging agent (202) loaded to the kernel, the kernel-level event being **characterized by** an attribute, and the kernel-level event being detected in the kernel space; the system being **characterized in that** the operations further include:
determining whether the detected kernel-level event satisfies a monitoring condition, the monitoring condition identifying at least one kernel-level event to log, and the determination being performed in the user space;
in response to determining that the detected kernel-level event satisfies the monitoring condition, generating (404) a log record that encapsulates the detected kernel-level event and the attribute, and the log record being generated in the user space; and
transmitting the generated log record from the user space, wherein, upon receiving the log record, the detected kernel-level event and the attribute are combined with one or more other log records from one or more computing devices (140, 146, 148) into a time-ordered event data stream configured to be evaluated by a remote server.

9. The system of claim 8, wherein the operations further comprise:
detecting a data signal, the data signal being detected in the kernel space of the computing device, and the computing device executing a real-time operating system; and
encapsulating the data signal as a log record, the encapsulation being performed in the user space.

10. The system of claim 9, wherein the operating system is installed on a programmable logic controller or a remote terminal unit of the industrial control system.

11. The system of claim 9, wherein the data signal is associated with an event, and wherein the generated log record includes a value associated with the data signal and the event associated with the data signal.

12. The system of claim 8, wherein the operation of detecting the kernel-level event using the logging agent (202) further comprises:
identifying one of more user file activities (302) being performed in the user space of the operating system;
detecting one or more system calls (304) that are triggered at the kernel space in response to the one or more user file activities (302) being performed in the user space, each system call (304) of the one or more system calls (304) corresponding to a user file activity (302) of the one or more user file activities (302) , and each system call (304) of the one or more system calls (304) corresponding to an input/output (I/O) request associated with a kernel-level process;
filtering the one or more system calls (304) using a device driver to determine which kernel-level event to monitor for security vulnerabilities; and
encapsulating at least one user file activity (302) in a log record when the at least one user file activity corresponds to the device driver.

13. The system of claim 12, wherein the operating system is installed on an operator terminal or supervisory computer of the industrial control system.

14. The system of claim 8, wherein the generated log record is received at the remote server, wherein the remote server additionally receives the one or more other log records, wherein the remote server generates the time-ordered event data stream that includes the generated log record and the one or more other log records in a sequence, such that a position of the generated log record or the one or more other log records in the sequence is based on a timestamp associated with each of the generated log record or the one or more other log records, wherein the generated log record is generated by a first type of computing device and the one or more other log records are generated by either the first type or a second type of computing device, and wherein each of the first type of computing device and the second type of computing device are included in the industrial control system.

15. A computer-program product tangibly embodied in a non-transitory machine-readable storage medium, including instructions configured to cause a data processing apparatus to perform the method of any one of claims 1 to 7.

## Patentansprüche

1. Computerimplementiertes Verfahren zum Protokollieren und Überwachen von Ereignissen auf Kernelebene in einem industriellen Steuerungssystem (102), umfassend:
Laden eines Protokollierungsagenten (202) auf einen Kernel eines Betriebssystems, das auf einer ersten Rechenvorrichtung (140, 146, 148) des industriellen Steuerungssystems (102) ausgeführt wird, wobei der Protokollierungsagent (202) konfiguriert ist, um Ereignisse auf Kernelebene zu erfassen, die auf der ersten Rechenvorrichtung (140, 146, 148) auftreten, und das Betriebssystem konfiguriert ist, um einen Kernelbereich und einen Benutzerbereich der ersten Rechenvorrichtung (140, 146, 148) zu definieren;
Erfassen eines Ereignisses auf Kernelebene an der ersten Rechenvorrichtung (140, 146, 148) unter Verwendung des Protokollierungsagenten (202), der auf den Kernel geladen ist, wobei das Ereignis auf Kernelebene durch ein Attribut gekennzeichnet ist und das Ereignis auf Kernelebene im Kernelbereich erfasst wird; wobei das Verfahren durch Folgendes gekennzeichnet ist:
Bestimmen, ob das erfasste Ereignis auf Kernelebene eine Überwachungsbedingung erfüllt, wobei die Überwachungsbedingung mindestens ein Ereignis auf Kernelebene zu protokollieren identifiziert und die Bestimmung im Benutzerbereich durchgeführt wird;
als Reaktion auf das Bestimmen, dass das erfasste Ereignis auf Kernelebene die Überwachungsbedingung erfüllt, Generieren (404) einer Protokollaufzeichnung, die das erfasste Ereignis auf Kernelebene und das Attribut einkapselt, und wobei die Protokollaufzeichnung in dem Benutzerbereich generiert wird; und
Übertragen der generierten Protokollaufzeichnung von dem Benutzerbereich, wobei, beim Empfangen der Protokollaufzeichnung, das erfasste Ereignis auf Kernelebene und das Attribut mit einer oder mehreren anderen Protokollaufzeichnungen von einer oder mehreren zweiten Rechenvorrichtungen (140, 146, 148) in einem zeitlich geordneten Ereignisdatenstrom kombiniert sind, der konfiguriert ist, um durch einen Remote-Server ausgewertet zu werden.

2. Computerimplementiertes Verfahren nach Anspruch 1, ferner umfassend:
Erfassen eines Datensignals unter Verwendung der ersten Rechenvorrichtung (140, 146, 148), wobei das Datensignal im Kernelbereich der ersten Rechenvorrichtung (140, 146, 148) erfasst wird und die erste Rechenvorrichtung (140, 146, 148) ein Betriebssystem in Echtzeit ausführt; und
Einkapseln des Datensignals als eine Protokollaufzeichnung, wobei das Einkapseln im Benutzerbereich durchgeführt wird.

3. Computerimplementiertes Verfahren nach Anspruch 2, wobei die erste Rechenvorrichtung (140, 146, 148) ein Sensor (146), ein Aktor (148), eine speicherprogrammierbare Steuerung oder ein Fernbedienungsterminal des industriellen Steuerungssystems (102) ist.

4. Computerimplementiertes Verfahren nach Anspruch 2, wobei das Datensignal mit einem Ereignis im Zusammenhang steht und wobei die generierte Protokollaufzeichnung einen Wert im Zusammenhang mit dem Datensignal und das Ereignis im Zusammenhang mit dem Datensignal beinhaltet.

5. Computerimplementiertes Verfahren nach Anspruch 1, wobei das Erfassen des Ereignisses auf Kernelebene unter Verwendung des Protokollierungsagenten (202) ferner Folgendes umfasst:
Identifizieren von einer oder mehreren Nutzerdateiaktivitäten (302), die im Benutzerbereich des Betriebssystems durchgeführt werden, das an der ersten Rechenvorrichtung (140, 146, 148) ausführt;
Erfassen von einem oder mehreren Systemaufrufen (304), die am Kernelbereich als Reaktion darauf ausgelöst werden, dass die eine oder mehreren Nutzerdateiaktivitäten (302) im Benutzerbereich durchgeführt werden, wobei jeder Systemaufruf (304) aus dem einen oder den mehreren Systemaufrufen (304) einer Nutzerdateiaktivität (302) aus der einen oder den mehreren Nutzerdateiaktivitäten (302) entspricht, und wobei jeder Systemaufruf (304) auf dem einen oder den mehreren Systemaufrufen (304) einer Eingabe/Ausgabe (I/O)-Anforderung im Zusammenhang mit einem Prozess auf Kernelebene entspricht;
Filtern des einen oder der mehreren Systemaufrufe (304) unter Verwendung eines Gerätetreibers, um zu bestimmen, welches Ereignis auf Kernelebene auf Sicherheitslücken überwacht werden soll; und
Einkapseln von mindestens einer Nutzerdateiaktivität (302) in einer Protokollaufzeichnung, wenn die mindestens eine Nutzerdateiaktivität (302) dem Gerätetreiber entspricht.

6. Computerimplementiertes Verfahren nach Anspruch 5, wobei die erste Rechenvorrichtung (140, 146, 148) ein Bedienterminal oder Überwachungscomputer des industriellen Steuerungssystems (102) ist.

7. Computerimplementiertes Verfahren nach Anspruch 1, wobei die generierte Protokollaufzeichnung am Remote-Server empfangen wird, wobei der Remote-Server zusätzlich die eine oder mehreren anderen Protokollaufzeichnungen empfängt, wobei der Remote-Server den zeitlich geordneten Ereignisdatenstrom generiert, der die generierte Protokollaufzeichnung und die eine oder mehreren anderen Protokollaufzeichnungen in einer Sequenz beinhaltet, sodass eine Position der generierten Protokollaufzeichnung oder der einen oder mehreren anderen Protokollaufzeichnungen in der Sequenz auf einem Zeitstempel im Zusammenhang mit jedem aus der generierten Protokollaufzeichnung oder der einen oder den mehreren anderen Protokollaufzeichnungen basiert, wobei die generierte Protokollaufzeichnung durch eine erste Art von Rechenvorrichtung generiert wird und die eine oder mehreren anderen Protokollaufzeichnungen durch entweder die erste Art oder eine zweite Art von Rechenvorrichtung generiert werden, und wobei jede aus der ersten Art von Rechenvorrichtung und der zweiten Art von Rechenvorrichtung in dem industriellen Steuerungssystem (102) beinhaltet sind.

8. System zum Protokollieren und Überwachen von Ereignissen auf Kernelebene in einem industriellen Steuerungssystem (102), umfassend:
einen oder mehrere Prozessoren des industriellen Steuerungssystems (102); und
ein nicht-transitorisches, computerlesbares Speichermedium, das Anweisungen enthält, die, wenn sie auf dem einen oder den mehreren Prozessoren ausgeführt werden, verursachen, dass der eine oder die mehreren Prozessoren Vorgänge durchführen, wobei die Vorgänge Folgendes beinhalten:
Laden eines Protokollierungsagenten (202) auf einen Kernel eines Betriebssystems des industriellen Steuerungssystems (102), wobei der Protokollierungsagent (202) konfiguriert ist, um Ereignisse auf Kernelebene zu erfassen, die am Kernel des Betriebssystems auftreten, und wobei das Betriebssystem konfiguriert ist, um einen Kernelbereich und einen Benutzerbereich zu definieren;
Erfassen eines Ereignisses auf Kernelebene unter Verwendung des Protokollierungsagenten (202), der auf den Kernel geladen ist, wobei das Ereignis auf Kernelebene durch ein Attribut gekennzeichnet ist und das Ereignis auf Kernelebene im Kernelbereich erfasst wird; wobei das System **dadurch gekennzeichnet ist, dass** die Vorgänge ferner Folgendes beinhalten:
Bestimmen, ob das erfasste Ereignis auf Kernelebene eine Überwachungsbedingung erfüllt, wobei die Überwachungsbedingung mindestens ein Ereignis auf Kernelebene zu protokollieren identifiziert und die Bestimmung im Benutzerbereich durchgeführt wird;
als Reaktion auf das Bestimmen, dass das erfasste Ereignis auf Kernelebene die Überwachungsbedingung erfüllt, Generieren (404) einer Protokollaufzeichnung, die das erfasste Ereignis auf Kernelebene und das Attribut einkapselt, und wobei die Protokollaufzeichnung in dem Benutzerbereich generiert wird; und
Übertragen der generierten Protokollaufzeichnung von dem Benutzerbereich, wobei, beim Empfangen der Protokollaufzeichnung, das erfasste Ereignis auf Kernelebene und das Attribut mit einer oder mehreren anderen Protokollaufzeichnungen von einer oder mehreren Rechenvorrichtungen (140, 146, 148) in einem zeitlich geordneten Ereignisdatenstrom kombiniert sind, der konfiguriert ist, um durch einen Remote-Server ausgewertet zu werden.

9. System nach Anspruch 8, wobei die Vorgänge ferner Folgendes umfassen:
Erfassen eines Datensignals, wobei das Datensignal im Kernelbereich der Rechenvorrichtung erfasst wird und die Rechenvorrichtung ein Betriebssystem in Echtzeit ausführt; und
Einkapseln des Datensignals als eine Protokollaufzeichnung, wobei das Einkapseln im Benutzerbereich durchgeführt wird.

10. System nach Anspruch 9, wobei das Betriebssystem auf einer speicherprogrammierbaren Steuerung oder einem Fernbedienungsterminal des industriellen Steuerungssystems installiert ist.

11. System nach Anspruch 9, wobei das Datensignal mit einem Ereignis im Zusammenhang steht und wobei die generierte Protokollaufzeichnung einen Wert im Zusammenhang mit dem Datensignal und das Ereignis im Zusammenhang mit dem Datensignal beinhaltet.

12. System nach Anspruch 8, wobei der Vorgang des Erfassens des Ereignisses auf Kernelebene unter Verwendung des Protokollierungsagenten (202) ferner Folgendes umfasst:
Identifizieren von einer oder mehreren Nutzerdateiaktivitäten (302), die im Benutzerbereich des Betriebssystems durchgeführt werden;
Erfassen von einem oder mehreren Systemaufrufen (304), die am Kernelbereich als Reaktion darauf ausgelöst werden, dass die eine oder mehreren Nutzerdateiaktivitäten (302) im Benutzerbereich durchgeführt werden, wobei jeder Systemaufruf (304) aus dem einen oder den mehreren Systemaufrufen (304) einer Nutzerdateiaktivität (302) aus der einen oder den mehreren Nutzerdateiaktivitäten (302) entspricht, und wobei jeder Systemaufruf (304) auf dem einen oder den mehreren Systemaufrufen (304) einer Eingabe/Ausgabe (I/O)-Anforderung im Zusammenhang mit einem Prozess auf Kernelebene entspricht;
Filtern des einen oder der mehreren Systemaufrufe (304) unter Verwendung eines Gerätetreibers, um zu bestimmen, welches Ereignis auf Kernelebene auf Sicherheitslücken überwacht werden soll; und
Einkapseln von mindestens einer Nutzerdateiaktivität (302) in einer Protokollaufzeichnung, wenn die mindestens eine Nutzerdateiaktivität dem Gerätetreiber entspricht.

13. System nach Anspruch 12, wobei das Betriebssystem auf einem Bedienterminal oder Überwachungscomputer des industriellen Steuerungssystems installiert ist.

14. System nach Anspruch 8, wobei die generierte Protokollaufzeichnung am Remote-Server empfangen wird, wobei der Remote-Server zusätzlich die eine oder mehreren anderen Protokollaufzeichnungen empfängt, wobei der Remote-Server den zeitlich geordneten Ereignisdatenstrom generiert, der die generierte Protokollaufzeichnung und die eine oder mehreren anderen Protokollaufzeichnungen in einer Sequenz beinhaltet, sodass eine Position der generierten Protokollaufzeichnung oder der einen oder mehreren anderen Protokollaufzeichnungen in der Sequenz auf einem Zeitstempel im Zusammenhang mit jedem aus der generierten Protokollaufzeichnung oder der einen oder den mehreren anderen Protokollaufzeichnungen basiert, wobei die generierte Protokollaufzeichnung durch eine erste Art von Rechenvorrichtung generiert wird und die eine oder mehreren anderen Protokollaufzeichnungen durch entweder die erste Art oder eine zweite Art von Rechenvorrichtung generiert werden, und wobei jede aus der ersten Art von Rechenvorrichtung und der zweiten Art von Rechenvorrichtung in dem industriellen Steuerungssystem beinhaltet sind.

15. Computerprogrammprodukt, das in einem nicht-transitorischen, maschinenlesbaren Speichermedium greifbar verkörpert ist, einschließlich Anweisungen, die konfiguriert sind, um zu verursachen, dass ein Datenverarbeitungsgerät das Verfahren nach einem der Ansprüche 1 bis 7 durchführt.

## Revendications

1. Procédé mis en oeuvre par ordinateur pour journalisation et surveillance d'événements de niveau noyau dans un système de commande industriel (102), comprenant
le chargement d'un agent de journalisation (202) sur un noyau d'un système d'exploitation s'exécutant sur un premier dispositif informatique (140, 146, 148) du système de commande industriel (102), l'agent de journalisation (202) étant configuré pour détecter des événements de niveau noyau se produisant dans le premier dispositif informatique (140, 146, 148), et le système d'exploitation étant configuré pour définir un espace noyau et un espace utilisateur du premier dispositif informatique (140, 146, 148) ;
la détection d'un événement de niveau noyau, dans le premier dispositif informatique (140, 146, 148), en utilisant l'agent de journalisation (202) chargé sur le noyau, l'événement de niveau noyau étant **caractérisé par** un attribut, et l'événement de niveau noyau étant détecté dans l'espace noyau ; le procédé étant **caractérisé par** :
la détermination du fait que l'événement de niveau noyau détecté satisfait ou non à une condition de surveillance, la condition de surveillance identifiant au moins un événement de niveau noyau à journaliser, et la détermination étant réalisée dans l'espace utilisateur ;
en réponse à la détermination que l'événement de niveau noyau détecté satisfait à la condition de surveillance, la génération (404) d'un enregistrement de journal qui encapsule l'événement de niveau noyau détecté et l'attribut, l'enregistrement de journal étant généré dans l'espace utilisateur ; et
la transmission de l'enregistrement de journal généré, depuis l'espace utilisateur, dans lequel, lors de la réception de l'enregistrement de journal, l'événement de niveau noyau détecté et l'attribut sont combinés avec un ou plusieurs autres enregistrements de journal provenant d'un ou de plusieurs seconds dispositifs informatiques (140, 146, 148) en un flux de données d'événement mis en ordre temporel configuré pour être évalué par un serveur à distance.

2. Procédé mis en oeuvre par ordinateur selon la revendication 1, comprenant en outre :
la détection d'un signal de données en utilisant le premier dispositif informatique (140, 146, 148), le signal de données étant détecté dans l'espace noyau du premier dispositif informatique (140, 146, 148), et le premier dispositif informatique (140, 146, 148) exécutant un système d'exploitation en temps réel ; et
l'encapsulation du signal de données sous forme d'enregistrement de journal, l'encapsulation étant réalisée dans l'espace utilisateur.

3. Procédé mis en oeuvre par ordinateur selon la revendication 2, dans lequel le premier dispositif informatique (140, 146, 148) est un capteur (146), un actionneur (148), un automate programmable industriel, ou une unité-terminal à distance du système de commande industriel (102).

4. Procédé mis en oeuvre par ordinateur selon la revendication 2, dans lequel le signal de données est associé à un événement, et dans lequel l'enregistrement de journal généré inclut une valeur associée au signal de données et l'événement associé au signal de données.

5. Procédé mis en oeuvre par ordinateur selon la revendication 1, dans lequel la détection de l'événement de niveau noyau en utilisant l'agent de journalisation (202) comprend en outre :
l'identification d'une ou de plusieurs activités de fichier utilisateur (302) en train d'être réalisées dans l'espace utilisateur du système d'exploitation s'exécutant sur le premier dispositif informatique (140, 146, 148) ;
la détection d'un ou de plusieurs appels de système (304) qui sont déclenchés dans l'espace noyau en réponse à l'une ou aux plusieurs activités de fichier utilisateur (302) en train d'être réalisées dans l'espace utilisateur, chaque appel de système (304) de l'un ou des plusieurs appels de système (304) correspondant à une activité de fichier utilisateur (302) de l'une ou des plusieurs activités de fichier utilisateur (302), et chaque appel de système (304) de l'un ou des plusieurs appels de système (304) correspondant à une demande d'entrée/sortie (I/O) associée à un processus de niveau noyau ;
le filtrage de l'un ou des plusieurs appels de système (304) en utilisant un pilote de dispositif pour déterminer l'événement de niveau noyau qui doit faire l'objet d'une surveillance concernant des vulnérabilités de sécurité ; et
l'encapsulation d'au moins une activité de fichier utilisateur (302) dans un enregistrement de journal lorsque l'au moins une activité de fichier utilisateur (302) correspond au pilote de dispositif.

6. Procédé mis en oeuvre par ordinateur selon la revendication 5, dans lequel le premier dispositif informatique (140, 146, 148) est un terminal d'opérateur ou un ordinateur superviseur du système de commande industriel (102).

7. Procédé mis en oeuvre par ordinateur selon la revendication 1, dans lequel l'enregistrement de journal généré est reçu dans le serveur à distance, dans lequel le serveur à distance reçoit de plus l'un ou les plusieurs autres enregistrements de journal, dans lequel le serveur à distance génère le flux de données d'événement mis en ordre temporel, qui inclut l'enregistrement de journal généré et l'un ou les plusieurs autres enregistrements de journal dans une séquence, de telle sorte qu'une position de l'enregistrement de journal généré ou de l'un ou des plusieurs autres enregistrements de journal dans la séquence soit sur la base d'une estampille temporelle associée à chacun de l'enregistrement de journal généré ou de l'un ou des plusieurs autres enregistrements de journal, dans lequel l'enregistrement de journal généré est généré par un premier type de dispositif informatique et l'un ou les plusieurs autres enregistrements de journal sont générés soit par le premier type soit par un second type de dispositif informatique, et dans lequel chacun du premier type de dispositif informatique et du second type de dispositif informatique est inclus dans le système de commande industriel (102).

8. Système pour journalisation et surveillance d'événements de niveau noyau dans un système de commande industriel (102), comprenant :
un ou plusieurs processeurs du système de commande industriel (102) ; et
un support de stockage non transitoire lisible par ordinateur contenant des instructions qui, lorsqu'elles sont exécutées sur l'un ou les plusieurs processeurs, font en sorte que l'un ou les plusieurs processeurs réalisent des opérations, dans lequel les opérations incluent
le chargement d'un agent de journalisation (202) sur un noyau d'un système d'exploitation du système de commande industriel (102), l'agent de journalisation (202) étant configuré pour détecter des événements de niveau noyau se produisant dans le noyau du système d'exploitation, et le système d'exploitation étant configuré pour définir un espace noyau et un espace utilisateur ;
la détection d'un événement de niveau noyau en utilisant l'agent de journalisation (202) chargé sur le noyau, l'événement de niveau noyau étant **caractérisé par** un attribut, et l'événement de niveau noyau étant détecté dans l'espace noyau ; le système étant **caractérisé en ce que** les opérations incluent en outre :
la détermination du fait que l'événement de niveau noyau détecté satisfait ou non à une condition de surveillance, la condition de surveillance identifiant au moins un événement de niveau noyau à journaliser, et la détermination étant réalisée dans l'espace utilisateur ;
en réponse à la détermination que l'événement de niveau noyau détecté satisfait à la condition de surveillance, la génération (404) d'un enregistrement de journal qui encapsule l'événement de niveau noyau détecté et l'attribut, et l'enregistrement de journal étant généré dans l'espace utilisateur ; et
la transmission de l'enregistrement de journal généré, depuis l'espace utilisateur, dans lequel, lors de la réception de l'enregistrement de journal, l'événement de niveau noyau détecté et l'attribut sont combinés avec un ou plusieurs autres enregistrements de journal provenant d'un ou de plusieurs dispositif informatiques (140, 146, 148) en un flux de données d'événement mis en ordre temporel configuré pour être évalué par un serveur à distance.

9. Système selon la revendication 8, dans lequel les opérations comprennent en outre :
la détection d'un signal de données, le signal de données étant détecté dans l'espace noyau du dispositif informatique, et le dispositif informatique exécutant un système d'exploitation en temps réel ; et
l'encapsulation du signal de données sous forme d'enregistrement de journal, l'encapsulation étant réalisée dans l'espace utilisateur.

10. Système selon la revendication 9, dans lequel le système d'exploitation est installé sur un automate programmable industriel ou une unité-terminal à distance du système de commande industriel.

11. Système selon la revendication 9, dans lequel le signal de données est associé à un événement, et dans lequel l'enregistrement de journal généré inclut une valeur associée au signal de données et l'événement associé au signal de données.

12. Système selon la revendication 8, dans lequel l'opération de la détection de l'événement de niveau noyau en utilisant l'agent de journalisation (202) comprend en outre :
l'identification d'une ou de plusieurs activités de fichier utilisateur (302) en train d'être réalisées dans l'espace utilisateur du système d'exploitation ;
la détection d'un ou de plusieurs appels de système (304) qui sont déclenchés dans l'espace noyau en réponse à l'une ou aux plusieurs activités de fichier utilisateur (302) en train d'être réalisées dans l'espace utilisateur, chaque appel de système (304) de l'un ou des plusieurs appels de système (304) correspondant à une activité de fichier utilisateur (302) de l'une ou des plusieurs activités de fichier utilisateur (302), et chaque appel de système (304) de l'un ou des plusieurs appels de système (304) correspondant à une demande d'entrée/sortie (I/O) associée à un processus de niveau noyau ;
le filtrage de l'un ou des plusieurs appels de système (304) en utilisant un pilote de dispositif pour déterminer l'événement de niveau noyau qui doit faire l'objet d'une surveillance concernant des vulnérabilités de sécurité ; et
l'encapsulation d'au moins une activité de fichier utilisateur (302) dans un enregistrement de journal lorsque l'au moins une activité de fichier utilisateur correspond au pilote de dispositif.

13. Système selon la revendication 12, dans lequel le système d'exploitation est installé sur un terminal d'opérateur ou un ordinateur superviseur du système de commande industriel.

14. Système selon la revendication 8, dans lequel l'enregistrement de journal généré est reçu dans le serveur à distance, dans lequel le serveur à distance reçoit de plus l'un ou les plusieurs autres enregistrements de journal, dans lequel le serveur à distance génère le flux de données d'événement mis en ordre temporel, qui inclut l'enregistrement de journal généré et l'un ou les plusieurs autres enregistrements de journal dans une séquence, de telle sorte qu'une position de l'enregistrement de journal généré ou l'un ou les plusieurs autres enregistrements de journal dans la séquence soit sur la base d'une estampille temporelle associée à chacun de l'enregistrement de journal généré ou de l'un ou des plusieurs autres enregistrements de journal, dans lequel l'enregistrement de journal généré est généré par un premier type de dispositif informatique et l'un ou les plusieurs autres enregistrements de journal sont générés soit par le premier type soit par un second type de dispositif informatique, et dans lequel chacun du premier type de dispositif informatique et du second type de dispositif informatique est inclus dans le système de commande industriel.

15. Produit programme d'ordinateur incorporé de façon tangible dans un support de stockage non transitoire lisible par machine, incluant des instructions configurées pour faire en sorte qu'un appareil de traitement de données réalise le procédé selon l'une quelconque des revendications 1 à 7.
